# EUROPEAN PATENT APPLICATION

(11) **EP 4 737 890 A1**
(43) Date of publication of application: **06.05.2026**
(21) Application number: 25211465.7
(22) Date of filing: 27.10.2025
(51) Int. Cl.: G01N 23/203

(54) **CRYSTAL EALUATION METHOD, CRYSTAL EVALUATION DEVICE, SIC SUBSTRATE, SIC DEVICE, AND SIC EPITAXIAL WAFER**

(30) Priority: 29.10.2024 JP 2024189925
(71) Applicant: Resonac Corporation, Tokyo 105-7325 (JP)
(72) Inventor: FUJIKAWA, Yohei, Tokyo (JP); KUMAGAI, Ryota, Tokyo (JP)
(74) Representative: Strehl & Partner mbB

(57) **Abstract**

Provided is a crystal evaluation method and a crystal evaluation device that can detect and evaluate efficiently in a short time multiple types of defects that may exist in SiC crystal, as well as a SiC substrate, a SiC device, and a SiC epitaxial wafer, each containing only a certain level or less of defects evaluated by the crystal evaluation method.

A crystal evaluation method of evaluating a crystal state of a SiC crystal has at least a detection process of acquiring Kikuchi patterns at a plurality of measurement points of the SiC crystal using an electron backscatter diffraction method, and an evaluation process of evaluating the crystal state of the SiC crystal through image analysis of the Kikuchi pattern of each measurement point obtained in the detection process.

## Description

### BACKGROUND OF THE INVENTION

### Field of the Invention

The present invention relates to a crystal evaluation method, a crystal evaluation device, a SiC substrate, a SiC device, and a SiC epitaxial wafer.

### Description of Related Art

Silicon carbide (SiC) has a dielectric breakdown field slightly larger and a band gap three times larger than those of silicon (Si). In addition, silicon carbide (SiC) has a thermal conductivity about three times larger than that of silicon (Si). For this reason, silicon carbide (SiC) is expected to be used in power devices, high frequency devices, high temperature operation devices, etc. The SiC substrates used in such devices are required to be of high quality, free from cracks and other damage, and contain minimal amounts of unintended crystalline state material.

Unintended crystal states that may exist in SiC crystals include, for example, fine heterogeneous polytypes, crystal orientation deviations, surface oxidation, processing damage, crystal disturbances, micro epitaxial defects, and the like.

In the related art, as a method for detecting the crystal state of such SiC crystals, for example, Patent Document 1 discloses a wafer evaluation method in which a gas is supplied to one side of a SiC wafer and penetration defects are detected based on the presence or absence of changes in internal pressure.

### [Patent Document]

[Patent Document 1] Japanese Unexamined Patent Application, First Publication No. 2024-085544

### SUMMARY OF THE INVENTION

However, in Patent Document 1, only one type of crystal state present in the SiC substrate could be detected, and it was not possible to detect multiple types of crystal states that may exist in the SiC substrate as described above. In order to detect and evaluate such multiple types of crystal states, the only option is to combine evaluation methods specialized for detection of each crystal state, but, when a plurality of evaluation methods are performed sequentially, accuracy of existence location information of the identified crystal states decreases, making it difficult to evaluate the crystal states. For this reason, there has been a demand for an evaluation method for SiC substrates that can efficiently detect multiple types of crystal states.

In consideration of the above-mentioned technical background, the present invention is directed to providing a crystal evaluation method and a crystal evaluation device that can detect and evaluate multiple types of crystal states that may exist in SiC crystal efficiently in a short time, and to providing a SiC substrate, a SiC device, and a SiC epitaxial wafer in which the crystal states evaluated by such a crystal evaluation method are present at a certain level or less.

In order to solve the above-mentioned problems, a crystal evaluation method, a crystal evaluation device, a SiC substrate, a SiC device, and a SiC epitaxial wafer according to an embodiment of the present invention provide the following means.
(1) A crystal evaluation method of Aspect 1 of the present invention is a crystal evaluation method of evaluating a crystal state of a SiC crystal, the method having at least: a detection process of acquiring Kikuchi patterns at a plurality of measurement points of the SiC crystal using an electron backscatter diffraction method; and an evaluation process of evaluating the crystal state of the SiC crystal through image analysis of the Kikuchi pattern of each measurement point obtained in the detection process.
(2) According to Aspect 2 of the present invention, in the crystal evaluation method of Aspect 1, the evaluation process includes a process of comparing a prepared Kikuchi pattern for reference with a Kikuchi pattern at each measurement point, and calculating an area ratio of measurement points determined to be identical.
(3) According to Aspect 3 of the present invention, in the crystal evaluation method of Aspect 1, the evaluation process includes a process of classifying a Kikuchi pattern for at least one crystal state in fine heterogeneous polytype, in-plane crystal orientation deviation, surface oxidation, processing damage, crystal disturbance, and micro epitaxial defects through machine learning, and displaying a distribution of the crystal state of the SiC crystal as an image mapping.
(4) A crystal evaluation device of Aspect 4 of the present invention is a crystal evaluation device configured to evaluate a crystal state of a SiC crystal, the device having: a scanning electron microscope including an electron backscatter diffraction device and an analysis device configured to perform image analysis of a Kikuchi pattern output from the electron backscatter diffraction device, wherein the analysis device performs image analysis of image data of a Kikuchi pattern at a measurement point of the SiC crystal, compares the Kikuchi pattern with a pre-stored Kikuchi pattern for reference, and evaluates a crystal state of the SiC crystal.
(5) A SiC substrate of Aspect 5 of the present invention includes a crystal structure in which 90% or more of Kikuchi patterns at a plurality of measurement point in one main surface of the SiC substrate obtained by an electron backscatter diffraction method are identical to each other.
(6) A SiC device of Aspect 6 of the present invention includes a crystal structure including a SiC substrate and in which 90% or more of Kikuchi patterns at a plurality of measurement points in one main surface of the SiC substrate obtained by an electron backscatter diffraction method are identical to each other.
(7) A SiC epitaxial wafer of Aspect 7 of the present invention has a SiC epitaxial layer including a crystal structure located on one main surface side of a substrate and in which 90% or more of Kikuchi patterns at a plurality of measurement points obtained by an electron backscatter diffraction method are identical to each other.

According to the embodiment of the present invention, it is possible to provide a crystal evaluation method and a crystal evaluation device that can detect and evaluate a plurality of crystal states that may exist in SiC crystal efficiently in a short time, and to provide a SiC substrate, a SiC device, and a SiC epitaxial wafer in which the crystal states evaluated by such a crystal evaluation method are present at only a certain level or less.

### BRIEF DESCRIPTION OF THE DRAWINGS

FIG. 1A is a photograph showing an example of a defect-free Kikuchi pattern in an embodiment and a Kikuchi pattern of each of various crystal states about 4H defect-free.
FIG. 1B is a photograph showing an example of a defect-free Kikuchi pattern in an embodiment and a Kikuchi pattern of each of various crystal states about surface processing damage.
FIG. 2A is a photograph showing an example of a Kikuchi pattern of each of various crystal states in the embodiment about fine heterogeneous polytype.
FIG. 2B is a photograph showing an example of a Kikuchi pattern of each of various crystal states in the embodiment about fine heterogeneous polytype.
FIG. 3 is a photograph showing mapping results of micro epitaxial defects in the embodiment.

### DETAILED DESCRIPTION OF THE INVENTION

Hereinafter, an embodiment of the present invention will be described in detail with reference to the accompanying drawings. Further, the drawings used in the following descriptions may show enlarged characteristic parts for the sake of convenience in order to make the features easier to understand, and the dimensional ratios of each component may not necessarily be the same as in reality. Further, the materials, dimensions, etc. exemplified in the following description are merely examples, the present invention is not necessarily limited to them and it is possible to make appropriate changes and modifications within the scope that does not change the effects of the present invention.

### [Crystal evaluation method]

A crystal evaluation method according to an embodiment of the present invention will be described.

A crystal evaluation method of an embodiment of the present invention detects a multiple types of unintended crystal states, for example, fine heterogeneous polytypes, in-plane crystal orientation deviations, surface oxidation, processing damage, crystal disturbance, micro epitaxial defects, and the like, which may exist in SiC (silicon carbide) crystal, and evaluates the crystal state of the SiC crystal.

Further, a Kikuchi pattern in the following description is obtained by the following procedure.

When an electron backscatter diffraction device (EBSD device) including a vacuum chamber (chamber), an electron beam irradiation mechanism and a screen constituted by a CCD sensor is used to set a SiC sample in the vacuum chamber and irradiate a sample surface thereof with electron beams, diffracted electrons are generated from the sample surface according to Bragg's law (λ = 2dsinθ). By receiving these diffracted electrons on the screen constituted by the CCD sensor, a picture unique to the crystal surface can be obtained. The picture is referred to as a Kikuchi pattern.

For example, while a crystal state such as a crystal disturbance or the like due to a fine heterogeneous polytype or heterogeneous polytypes is determined by an evaluation method such as microscopic observation, X-ray topography, or the like, in the related art, in the crystal evaluation method of the embodiment, detection and evaluation are performed by an electron backscatter diffraction method (hereinafter, referred to as an EBSD method). The fine heterogeneous polytype produces a unique Kikuchi pattern that is different from defect-free areas or existence areas of other crystal states. Accordingly, the crystal disturbance caused by heterogeneous polytypes can be seen as a unique disturbance in the Kikuchi pattern image.

In addition, the crystal state caused by the substrate surface condition includes surface oxidation and surface processing damage. In the related art, while different crystal state detection methods were required for surface oxidation using an X-ray photoelectron spectroscopy (XPS) method and for surface processing damage using an X-ray diffraction (XRD) method, the crystal evaluation method for this embodiment uses the EBSD method for detection and evaluation. Surface oxidation and surface processing damage produce unique Kikuchi patterns that are different from defect-free areas and the existence areas of other crystal states. Accordingly, crystal disturbance caused by the surface oxidation or the surface processing damage can be seen as a unique disturbance in the Kikuchi pattern image.

Further, it is known that there are 3C polytypes in the crystal state that can occur in the epitaxial film formation process, and in the related art, these have been identified using the fluorescence (PL) mapping method or the like, but in the crystal evaluation method of the embodiment, these are detected and evaluated using the EBSD method. This EBSD method also provides information on the crystal orientation of the SiC substrate. In transformation from 4H (0001) to 3C (111), there are two types of 3C crystal orientations (orientations that are 180° inverted from each other), and the PL mapping method in the related art could not distinguish between these two crystal orientations, but, the EBSD method can distinguish between these two crystal orientations, improving analysis accuracy.

In the procedure of the crystal evaluation method, first, a SiC crystal of an evaluation target, for example, a SiC substrate or a SiC epitaxial wafer (sample) is placed on a sample stage of a scanning electron microscope (SEM) including an electron backscatter diffraction device (EBSD device). Then, a sample surface in the SEM is irradiated with electron beams. Accordingly, a Kikuchi pattern, which is a picture unique to the crystal surface, is obtained (detection process). The Kikuchi pattern obtained at this time differs depending on the crystal structure or the crystal orientation, and therefore a Kikuchi pattern corresponding to each of the plurality of crystal states is formed.

Here, it is also possible to scan the electron beam of the SEM along the sample surface and obtain Kikuchi patterns from all measurement points in an arbitrary measurement area. Accordingly, it is possible to acquire a mapping image of the Kikuchi patterns in the measurement area on the sample surface.

Next, image data of the Kikuchi pattern at the measurement point output from the EBSD device is input into an analysis device constituted by an image processing computer or the like, image analysis of the Kikuchi pattern at the measurement point is performed to determine whether or not the above-mentioned crystal states (fine heterogeneous polytype, in-plane crystal orientation deviation, surface oxidation, processing damage, crystal disturbance, micro epitaxial defects, etc.) exist at the measurement point, and if these crystal states exist, the type of crystal state is identified and the crystal state of the sample is evaluated (evaluation process).

Specifically, the Kikuchi pattern for reference upon being defect-free, and Kikuchi patterns for reference unique to each type of crystal state (e.g., fine heterogeneous polytype, in-plane crystal orientation deviation, surface oxidation, processing damage, crystal disturbance, micro epitaxial defects, etc.) are stored in a memory of the analysis device, etc. Such Kikuchi patterns for reference can be obtained by previously machine-learning unique Kikuchi patterns for, for example, fine heterogeneous polytypes, in-plane crystal orientation deviations, surface oxidation, processing damage, crystal disturbance, and micro epitaxial defects.

Then, the analysis device sequentially compares the Kikuchi pattern image of the input measurement point with pre-stored images of multiple types of Kikuchi patterns for reference, and detects Kikuchi patterns that are similar or match each other. Accordingly, when it is determined whether the above-mentioned crystal state exists at the measurement point of the SiC substrate (sample) and the above-mentioned crystal state exists, the type of the crystal state is identified. Then, the crystal evaluation results at this measurement point are displayed, for example, on a monitor.

In addition, in the evaluation process, it is also preferable to calculate an area ratio of a measurement point where the Kikuchi pattern of the measurement point and the Kikuchi pattern for the reference are determined to be the same. Accordingly, data on the area ratios present for each of the above-mentioned types of crystal states on one main surface of the SiC substrate (sample) can be obtained.

In addition, in the evaluation process, it is also preferable to scan the electron beam of the SEM along the sample surface, obtain Kikuchi patterns from all measurement points in an arbitrary measurement area, compare all of these Kikuchi patterns with the Kikuchi pattern for reference, and display the distribution of each of the above-mentioned crystal states on one main surface of the SiC substrate as an image mapping.

As described above, according to the crystal evaluation method of the embodiment, by comparing the Kikuchi pattern of the SiC crystal (sample) obtained by the EBSD method with the Kikuchi pattern for reference stored in advance for each type of crystal state described above, it is possible to identify the multiple types of crystal states using the single detection method, enabling crystal evaluation of the SiC crystals with high accuracy and in a short time. For example, like in the related art, since there is no need to combine multiple different detection methods for each type of crystal state, crystal evaluation can be speeded up and a decrease in crystal state detection accuracy caused by combining multiple detecting methods can be prevented.

### [Crystal evaluation device]

The crystal evaluation device of the embodiment has a scanning electron microscope (SEM) including an electron backscatter diffraction device (EBSD device), and an analysis device configured to perform image analysis of Kikuchi patterns output from the electron backscatter diffraction device. Then, the analysis device performs image analysis of the Kikuchi pattern at the measurement point of the SiC crystal and compares it with a pre-stored Kikuchi pattern for reference to evaluate the crystal state of the SiC substrate. The crystal evaluation method using a specific analysis device can be performed following the evaluation process of the crystal evaluation method described above.

In such a crystal evaluation device, spatial resolution improves when a distance between an object lens constituting the SEM and the sample is reduced. In a typical SEM, the distance between the object lens and the sample is set to several centimeters. In addition, typical disposition for EBSD analysis is to tilt the sample at an angle of 60° to 70°.

However, in this standard SEM disposition, when a large SiC substrate (sample), such as a 6-inch one, is tilted 60° to 70°, the object lens interferes with the sample, making it difficult to measure the entire surface of the sample.

Since each crystal state present in the SiC substrate (e.g., fine heterogeneous polytype, in-plane crystal orientation deviation, surface oxidation, processing damage, crystal disturbance, micro epitaxial defects, etc.) is several micrometers or larger in size, spatial resolution of several nanometers, as with a typical SEM, is not required. For this reason, in the crystal evaluation device of the embodiment, the distance between the sample and the object lens is set so that even if a sample of approximately 6 to 10 inches is tilted at an angle of 60° to 70°, it will not interfere with the object lens, thereby reducing spatial resolution.

In addition, by adjusting the tilt angle of the sample from 10° to 45°, the spacing distance between the sample and the object lens can be shortened.

### [SiC substrate]

The SiC substrate of this embodiment includes a crystal structure in which 90% or more of the Kikuchi patterns obtained by the electron backscatter diffraction method at the plurality of measurement points on one main surface of the SiC substrate are identical to each other.

Such measurement points may be set, for example, at least 10 or more, preferably 20 or more, 30 or more, 40 or more, 50 or more, and more preferably 100 or more at equal intervals on one main surface of the SiC substrate.

In addition, the Kikuchi patterns identical to each other may be at least 90% or more, preferably 92% or more, 94% or more, 96% or more, 98% or more, more preferably 99% or more, or 100%.

In such a SiC substrate, Kikuchi patterns are obtained at 100 or more locations at equal intervals in the X and Y directions along one main surface of the SiC substrate using the above-mentioned crystal evaluation method of the embodiment, and the images of all these Kikuchi patterns are compared with each other. Then, if a crystal structure has 100 or more Kikuchi patterns in which 90% or more are identical to each other, for example, if the crystal structure has 90% or more defect-free Kikuchi pattern images, it can be used as a high-quality semiconductor substrate.

### [SiC device]

The SiC device of the embodiment includes a SiC substrate, and on one main surface of the SiC substrate, has a crystal structure in which 90% or more of the Kikuchi patterns at the plurality of measurement points obtained by the electron backscatter diffraction method are identical to each other.

Such measurement points may be set, for example, at least 10 or more, preferably 20 or more, 30 or more, 40 or more, 50 or more, and more preferably 100 or more at equal intervals on one main surface of the SiC substrate.

In addition, the Kikuchi patterns identical to each other may be at least 90% identical, preferably 92% or more, 94% or more, 96% or more, 98% or more, more preferably 99% or more, or 100%.

Such a SiC device maintains uniformity of the crystal structure even in tiny areas, such as minute SiC chip substrates that make up the SiC device, which are cut out from the SiC substrate by dicing, making it possible to create SiC devices for power devices with excellent semiconductor characteristics.

### [SiC epitaxial wafer]

The SiC epitaxial wafer of this embodiment has a SiC epitaxial layer on one main surface side of the substrate, which has a crystal structure in which more than 90% of the Kikuchi patterns at the plurality of measurement points obtained by the electron backscatter diffraction method are identical to each other.

Such measurement points may be set, for example, at least 10 or more, preferably 20 or more, 30 or more, 40 or more, 50 or more, and more preferably 100 or more at equal intervals on one main surface of the SiC substrate.

In addition, the Kikuchi patterns identical to each other may be at least 90% identical, preferably 92% or more, 94% or more, 96% or more, 98% or more, more preferably 99% or more, or 100%.

By forming the SiC epitaxial layer on the main surface of the SiC substrate, the crystal structure of the surface becomes denser, and the number of the above-mentioned crystal states (e.g., fine heterogeneous polytype, in-plane crystal orientation deviation, surface oxidation, processing damage, crystal disturbance, micro epitaxial defects, etc.) can be reduced.

Although the embodiment of the present invention has been described above, this embodiment is presented as an example and is not intended to limit the scope of the invention. Such embodiments can be implemented in various other forms, and various omissions, substitutions, and modifications can be made without departing from the spirit of the invention. These embodiments and variants thereof are intended to be included within the scope and spirit of the inventions, as well as within the scope of the claims and their equivalents.

### [Example]

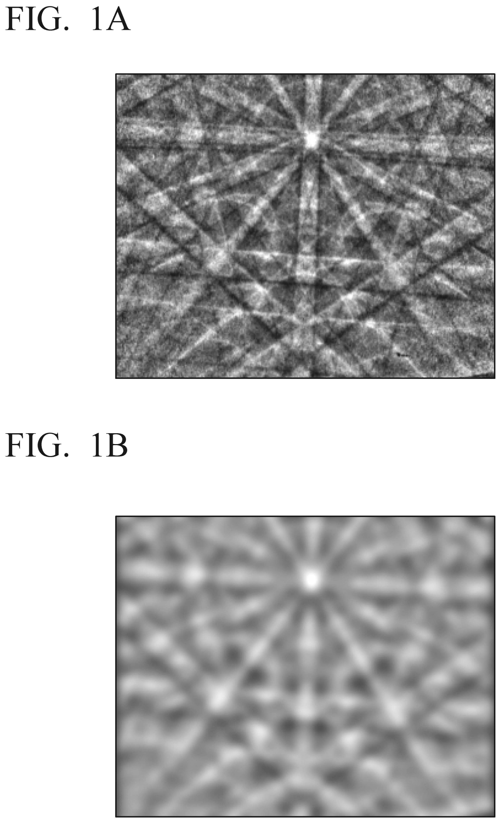

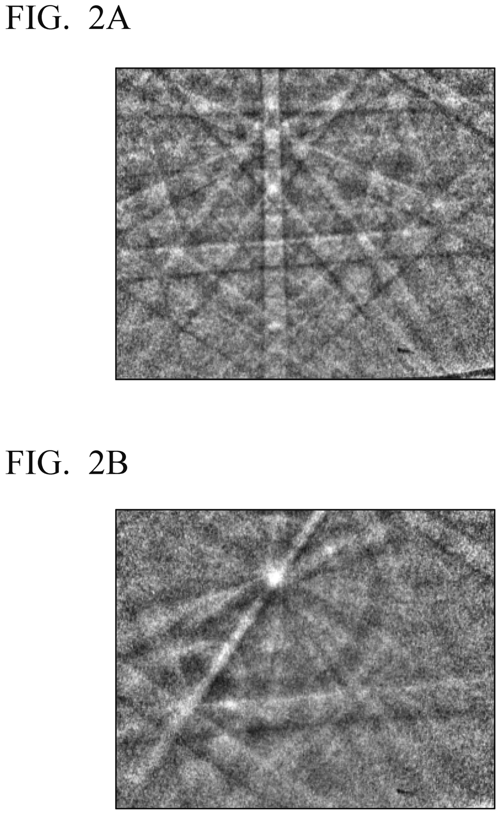

Using the crystal evaluation method of this embodiment, Kikuchi patterns were actually obtained for each crystal state of the SiC substrate. FIG. 1A shows photographs of the Kikuchi patterns of 4H defect-free, FIG. 1A shows photographs of the Kikuchi patterns of surface processing damage, and micro epitaxial defects, and FIG. 2A and FIG. 2B shows photographs of the Kikuchi pattern of fine heterogeneous polytype.

According to FIG. 1A to FIG. 2B, it can be seen that the Kikuchi pattern in each crystal state is disturbed with respect to the Kikuchi pattern in the defect-free area. It was confirmed that by comparing the unique Kikuchi pattern for each crystal state with the Kikuchi pattern obtained at the measurement point using image processing, it is possible to identify the type of each crystal state present in the SiC substrate.

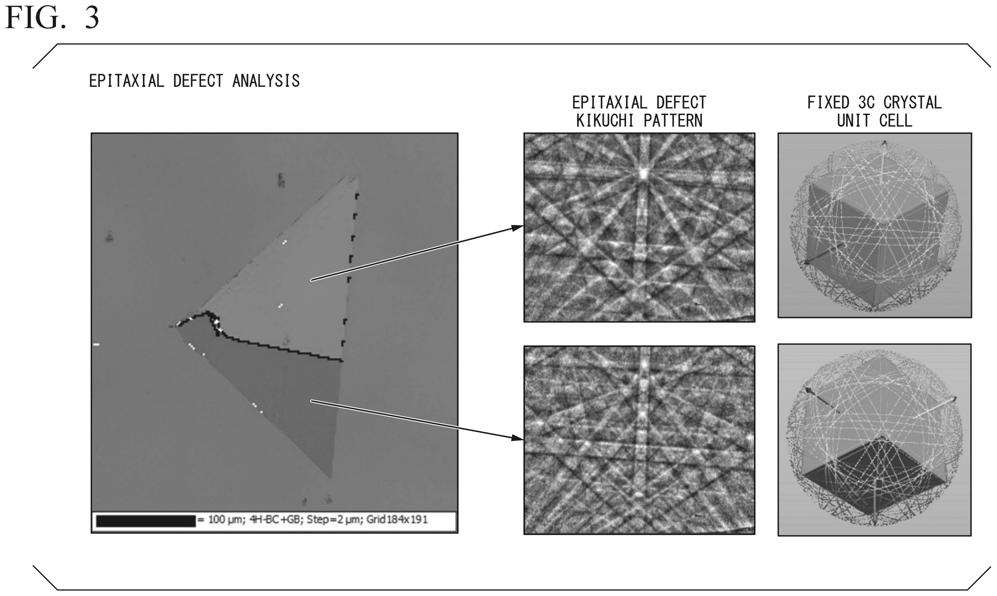

Next, the electron beam of the SEM was scanned along the sample surface, and micro epitaxial defects were mapped based on the Kikuchi patterns from all measurement points in an arbitrary measurement area. The results are shown photographically in FIG. 3.

According to FIG. 3, an existence area of micro-epitaxial defects was mapped in a different color from the defect-free area, and it was confirmed that the surface distribution of micro-epitaxial defects could be easily detected.

Next, using the crystal evaluation method of this embodiment, crystal evaluation of the SiC devices was actually performed. EBSD measurements were performed at 100 locations per area equivalent to one 5 mm square chip on one main surface of an 8-inch SiC substrate.

As a result, areas where the rate of the Kikuchi pattern of 4H-SiC was 99% or more were identified. A SiC device was fabricated using an area equivalent to one identified 5 mm square chip. The fabricated SiC device has excellent uniformity of the crystal structure at a microscopic level, which was not considered in SiC devices in the related art, and it is possible to realize a SiC device with excellent long-term reliability.

## Claims

1. A crystal evaluation method of evaluating a crystal state of a SiC crystal, the method comprising:
a detection process of acquiring Kikuchi patterns at a plurality of measurement points of the SiC crystal using an electron backscatter diffraction method; and
an evaluation process of evaluating the crystal state of the SiC crystal through image analysis of the Kikuchi pattern of each measurement point obtained in the detection process.

2. The crystal evaluation method according to claim 1 or 2,
wherein the evaluation process includes a process of comparing a prepared Kikuchi pattern for reference with a Kikuchi pattern at each measurement point, and calculating an area ratio of measurement points determined to be identical.

3. The crystal evaluation method according to any one of claims 1 to 3,
wherein the evaluation process includes a process of classifying a Kikuchi pattern for at least one crystal state in fine heterogeneous polytype, in-plane crystal orientation deviation, surface oxidation, processing damage, crystal disturbance, and micro epitaxial defects through machine learning, and displaying a distribution of the crystal state of the SiC crystal as an image mapping.

4. A crystal evaluation device configured to evaluate a crystal state of a SiC crystal, the device comprising:
a scanning electron microscope including an electron backscatter diffraction device, and
an analysis device configured to perform image analysis of a Kikuchi pattern output from the electron backscatter diffraction device,
wherein the analysis device performs image analysis of a Kikuchi pattern at a measurement point of the SiC crystal, compares the Kikuchi pattern with a pre-stored Kikuchi pattern for reference, and evaluates a crystal state of the SiC crystal.

5. A SiC substrate comprising a crystal structure,
wherein the crystal structure in which 90% of Kikuchi patterns at a plurality of measurement points in one main surface of the SiC substrate obtained by an electron backscatter diffraction method are identical to each other.

6. A SiC device comprising a crystal structure comprising,
wherein the crystal structure including a SiC substrate and in which 90% or more of Kikuchi patterns at a plurality of measurement points in one main surface of the SiC substrate obtained by an electron backscatter diffraction method are identical to each other.

7. A SiC epitaxial wafer comprising a SiC epitaxial layer,
wherein the SiC epitaxial layer including a crystal structure located on one main surface side of a substrate and in which 90% or more of Kikuchi patterns at a plurality of measurement points obtained by an electron backscatter diffraction method are identical to each other.
